# EUROPÄISCHE PATENTSCHRIFT

(11) **EP 2 401 088 B1**
(45) Veröffentlichungstag und Bekanntmachung des Hinweises auf die Patenterteilung: **12.03.2014**
(21) Anmeldenummer: 10701865.7
(22) Anmeldetag: 28.01.2010
(51) Int. Cl.: B22C 23/02, B22D 17/20, B29C 33/58, B05B 1/06, B05B 7/26

(54) **VERFAHREN UND SPRÜHVORRICHTUNG ZUM AUFBRINGEN EINES OBERFLÄCHENBEHANDLUNGSMITTELS AUF EINE FORMWAND EINER GUSSFORM**
METHOD AND SPRAYING APPARATUS FOR THE APPLICATION OF A SURFACE TREATMENT SUBSTANCE TO THE FORM WALL OF A MOULD
PROCÉDÉ ET APPAREIL GICLEUR POUR L'APPLICATION D'UNE SUBSTANCE DE TRAITEMENT SUR PAROIS DE MOULES

(30) Priorität: 25.02.2009 DE 102009010361
(43) Veröffentlichungstag der Anmeldung: 04.01.2012
(73) Patentinhaber: KS Aluminium-Technologie GmbH, 74172 Neckarsulm (DE)
(72) Erfinder: REITER, Roland, 74193 Schwaigern (DE)
(74) Vertreter: Patentanwälte ter Smitten Eberlein Rütten Partnerschaftsgesellschaft
(86) Internationale Anmeldenummer: PCT/EP2010/050985
(87) Internationale Veröffentlichungsnummer: WO 2010/097265

(56) Entgegenhaltungen:
- DE-A1- 4 420 679
- DE-A1- 4 437 777
- GB-A- 1 002 541

## Beschreibung

Die Erfindung betrifft ein Verfahren zum Aufbringen eines Oberflächenbehandlungsmittels auf eine Formwand einer Gussform mittels einer Sprühvorrichtung, wobei das Oberflächenbehandlungsmittel in einer Oberflächenbehandlungsmittelmischstation gemischt wird und über Zuführleitungen einem Sprühgerät zugeführt wird, von wo aus das Oberflächenbehandlungsmittel sowie Druckluft in ein Sprühwerkzeug gefördert werden und anschließend das Oberflächenbehandlungsmittel mittels der Druckluft zerstäubt und über eine Sprühdüse auf die Formwand aufgesprüht wird sowie eine Sprühvorrichtung zum Aufbringen eines Oberflächenbehandlungsmittels auf eine Formwand einer Gussform mit einer Oberflächenbehandlungsmittelmischstation, Zuführleitungen, über die das Oberflächenbehandlungsmittel und Druckluft förderbar sind, einem Sprühgerät, das über die Zuführleitungen mit dem Speicherbehälter fluidisch verbunden ist, einem Sprühwerkzeug, welches über die Zuführleitungen mit dem Sprühgerät und einer Druckluftpumpe fluidisch verbunden ist und welches eine Sprühdüse aufweist, über die das Oberflächenbehandlungsmittel auf die Formwand sprühbar ist.

Derartige Verfahren und Sprühvorrichtungen werden beispielsweise bei der Herstellung von Zylinderkurbelgehäusen aus Aluminiumdruckguss verwendet. Dabei wird zunächst die vom letzten Gießvorgang noch heiße Gussform gekühlt und anschließend mittels einer derartigen Sprühvorrichtung ein Trennmittel aufgetragen, um eine gute Entformbarkeit des gegossenen Werkstücks von der Formwand sicherzustellen sowie eine gute Oberflächenqualität des Werkstücks zu erzielen.

Die Kühlung erfolgt derart, dass die Gussform vor jedem Gießvorgang möglichst die gleiche Anfangstemperatur aufweist, so dass gleichbleibende äußere Bedingungen im Gießprozess geschaffen werden. Das Kühlmittel besteht dabei üblicherweise aus Wasser. Das Trennmittel ist eine in Wasser gelöste Wirksubstanz, welche auf den behandelten Oberflächen Polymerketten bildet, die sowohl den Wärmeübergang zur Form reduzieren als auch ein Anbacken beziehungsweise Verschweißen zwischen Stahlform und Schmelze verhindern sollen.

Um eine möglichst gleichmäßige Beschichtung der Gussform mit Trennmittel zu erhalten, wurden das Verfahren und die verwendeten Sprühvorrichtungen in den letzten Jahren fortlaufend verfeinert. Trotz verschiedener Lösungsansätze und genauer Systemüberwachung traten häufig Fehler, wie Warmrisse, Verzüge oder Porositäten am Werkstück auf, die entweder durch Druckschwankungen in der Trennmittelleitung, verstopfte Sprühköpfe entstanden oder durch eine nicht einheitliche Anfangstemperatur beim Auftragen des Trennmittels. Ein Verstopfen der Sprühköpfe entsteht insbesondere durch die Verwendung der üblichen wachshaltigen Trennmittel.

Um insbesondere ein Verstopfen der Sprühköpfe zu verhindern wird in der DE 44 20 679 A1 eine Sprühvorrichtung und ein Verfahren zum Besprühen von Formwänden einer Gussform beschrieben, bei dem ein Formwandbehandlungsmittel und Blasluft über ein Sprühwerkzeug mit einer nach dem Außenmischprinzip arbeitenden Sprühdüse auf die Oberfläche einer Form gesprüht wird. Zur Einstellung des resultierenden Arbeitsmediendruckes verfügt die Sprühvorrichtung über ein vorgeschaltetes Druckregelventil, weiches über eine Steuereinheit angesteuert wird, so dass der Druck des Arbeitsmediums und der Blasluft regelbar sind. Der Druck soll gegebenenfalls derart eingestellt werden, dass das durch den Leidenfrost'schen Effekt an den heißen Formwandbereichen auftretende Dampfpolster durchstoßen wird, so dass die vorhergehende Kühlung verringert werden kann.

Diese Sprühvorrichtung ist jedoch durch den zur Verfügung stehenden Arbeitsmediendruck beschränkt, der in bekannten Ausführungen maximal 6 bar beträgt. Somit ist es weiterhin notwendig, vor dem Aufbringen des Formwandbehandlungsmittels die Gussform oder ein Werkstück zunächst zumindest kurzzeitig zu kühlen, was üblicherweise durch Aufsprühen eines flüssigen Kühlmittels stattfindet.

Des Weiteren ist aus der DE 44 37 777 A1 eine Sprühvorrichtung bekannt, bei der die Düsen als Innenmischdüsen ausgeführt sind, die entsprechend mit höherem Luftdruck arbeiten müssen. Auch eine Sprühvorrichtung mit derartigen Düsen eignet sich nicht zur schnellen Abkühlung heißer Gießformen.

Es stellt sich daher die Aufgabe, eine Sprühvorrichtung und ein Verfahren zum Aufbringen eines Oberflächenbehandlungsmittels auf eine Formwand einer Gussform bereitzustellen, bei deren Einsatz auf einen zusätzlichen Kühlungsvorgang auch bei hohen Formwandtemperaturen nach dem Gießen vollständig verzichtet werden kann und die Takt- und Sprühzeiten deutlich reduziert werden können.

Diese Aufgabe wird durch ein Verfahren zum Aufbringen eines Oberflächenbehandlungsmittels auf eine Formwand einer Gussform gelöst, bei der das Oberflächenbehandlungsmittel nach Verlassen der Oberflächenbehandlungsmittelmischstation mittels einer Flüssigkeitsdruckpumpe auf einen Druck von zumindest 13 bar, vorzugsweise 24 bar, verdichtet wird sowie durch eine Sprühvorrichtung zum Aufbringen eines Oberflächenbehandlungsmittels auf eine Formwand einer Gussform, bei der zwischen der Oberflächenbehandlungsmittelmischstation und dem Sprühgerät eine Flüssigkeitsdruckpumpe angeordnet ist, über die der Druck des Oberflächenbehandlungsmittels auf zumindest 13 bar, vorzugsweise 24 bar steigerbar ist.

Durch dieses erfindungsgemäße Verfahren beziehungsweise die erfindungsgemäße Sprühvorrichtung wird das Oberflächenbehandlungsmittel derart beschleunigt, dass der Leidenfrost'sche Effekt auch bei noch heißen Gussformen zuverlässig durchschlagen wird, wodurch auf einen vorhergehenden Kühlvorgang vollständig verzichtet werden kann. Zusätzlich verkürzt sich die Taktzeit um 30- 50%. Zusätzlich werden durch die starke Kühlwirkung beim Aufsprühen auf die Gussformoberflächen beim anschließenden Gießen hohe Erstarrungsgeschwindigkeiten und daraus resultierend sehr geringe Porositäten des Gussstücks erreicht.

Durch das Durchschlagen des Leidenfrost'schen Effekts wird das Trennmittel schon bei sehr hohen Werkzeugtemperaturen aufgetragen, und wirkt daher werkzeugschonend. Dadurch kann die übliche Standzeit bei zum Beispiel einem Motorblockwerkzeug von 90000 Abformungen, mit dem beschriebenen Verfahren auf 160000 Abformungen erhöht werden.

In einem bevorzugten Verfahren wird vor dem Besprühen der Formwand die Flüssigkeitsdruckpumpe eingeschaltet und baut den Druck auf und werden zum Beenden des Sprühvorgangs zunächst die Förderung des Oberflächenbehandlungsmittels und die Flüssigkeitsdruckpumpe gestoppt und daraufhin wird die Formwand mit der Druckluft getrocknet. Somit werden unnötige Pumpenlaufzeiten verhindert und durch das Ausblasen trockene Gussformen erreicht, was eine Oberflächenqualität der gegossenen Werkstücke sicherstellt.

Vorzugsweise wird ein wachsfreies Oberflächenbehandlungsmittel verwendet, wodurch beim Gießprozess weniger Vergasungen auftreten, was zu sehr porenarmen Werkstücken und somit einer verbesserten Oberflächenqualität des gegossenen Werkstücks führt und zusätzlich ein Verstopfen der Sprühdüsen vermeidet.

In einer vorteilhaften Weiterbildung der erfindungsgemäßen Sprühvorrichtung ist die Sprühdüse als Ringspaltdüse ausgebildet. Dies führt durch die geringen vorhandenen Querschnitte zu einer starken Beschleunigung des Oberflächenbehandlungsmittels, wodurch ein hoher Selbstreinigungseffekt auftritt und eine zusätzliche Verbesserung beim Durchschlagen des Dampfpolsters auftritt.

In einer hierzu weiterführenden Ausführungsform ist der Ringspalt der Ringspaltdüse 0,5 bis 0,6 mm breit und beträgt der Kegeldurchmesser am Austritt der Ringspaltdüse 5 bis 7mm. Mit derartigen Abmessungen werden besonders gute Ergebnisse bei der Benetzung der Gussform erzielt.

Um auch Gussformen mit Hinterschnitten und komplizierten Formen vollständig benetzen zu können, ist die Winkellage der Ringspaltdüse über einen Kugelkopf einstellbar, so dass immer ein senkrechtes Auftreffen des Sprühstrahls auf die Oberfläche einstellbar ist. Auch kann bei engen Platzverhältnissen der Sprühkopf dicht an die Formwand herangeführt werden.

In einer vorteilhaften Ausbildung der erfindungsgemäßen Sprühvorrichtung sind die Zuführleitungen druckfest ausgeführt. Dies bedeutet, dass die Leitungen auch Druckspitzen von über 24 bar aushalten müssen, ohne zu platzen.

Zur zusätzlichen Sicherheit ist in Strömungsrichtung hinter der Flüssigkeitsdruckpumpe ein Überdruckventil angeordnet, welches verhindert, dass der Druck über den Auslegepunkt der Anlage steigt und so Beschädigungen an der Anlage entstehen.

Mit der erfindungsgemäßen Sprühvorrichtung und dem erfindungsgemäßen Verfahren werden sehr gute Oberflächenqualitäten am Werkstück auch bei komplizierten Werkstückformen erhalten, wobei gleichzeitig die Zykluszeiten zum Gießen und Vorbereiten verkürzt werden können.

Im Folgenden wird die Funktionsweise und der Aufbau einer erfindungsgemäßen Sprühvorrichtung und der Ablauf des erfindungsgemäßen Verfahrens beispielhaft erklärt.

Die erfindungsgemäße Sprühvorrichtung weist eine Oberflächenbehandlungsmittelmischstation auf, die mit einem Wasserzulauf aus einem Wassertank und einem Konzentratzulauf aus einem Vorlagenbehälter verbunden ist. Die Förderung des Trennmittels in den Blasenspeicher erfolgt über eine Ringleitung mit einem Druck von bis zu 10 bar. Dieses Konzentrat beinhaltet die Wirksubstanz, die als Trennmittel wirkt. Dieses Trennmittel ist wachsfrei. Es kann beispielsweise ein Trennmittel der Firma Geiger mit dem Namen Trennex W3351 verwendet werden, welches aus 12% in Wasser gelösten organisch modifizierten Polysiloxanen, 3,5% EP-Additiven, 2% Emulgatoren in Form von Fettalkoholethoxilaten und 1% Stabilisatoren, Bioziden und Entschäumern besteht. Dieses Trennmittel wird mit dem zusätzlichen Wasser in der Oberflächenbehandlungsmittelmischstation vermischt.

Die entstehende hochverdünnte Emulsion wird nun erfindungsgemäß über eine frequenzgeregelte Flüssigkeitsdruckpumpe aus der als Blasenspeicher ausgebildeten Mischstation zu einem Sprühgerät gefördert, wobei der Druck des Oberflächenbehandlungsmittels auf 24 bar erhöht wird.

Die fluidische Verbindung zum Sprühgerät erfolgt über eine Verbindungsleitung, welche, wie auch die folgenden Leitungen und Aggregate bis ca. 30 bar druckfest ausgeführt ist, um Beschädigungen zu vermeiden. Zum zusätzlichen Schutz der Anlage und des Bedienungspersonals ist in der Leitung ein Überdruckventil angeordnet, welches bei vorhandenem Überdruck öffnet. Diese Reserve ist erforderlich, da beim Schließen der Düsen beim Abschalten der Anlage Druckspitzen auftreten können, die über dem normalen Betriebsdruck liegen.

Das druckfest ausgeführte Sprühgerät weist mehrere Sprühwerkzeuge auf, von denen jeweils zumindest eines für das Besprühen einer feststehenden Seite einer Gussform und eine für das Besprühen einer beweglichen Seite der Gussform angeordnet sind. Die Bewegung der Sprühwerkzeuge an der Gussform kann dabei computergesteuert erfolgen.

Die Sprühwerkzeuge weisen einen Druckluftanschluss und einen Anschluss für das Oberflächenbehandlungsmittel auf und sind ebenfalls auf die hohen Fluiddrücke ausgelegt. Im Sprühwerkzeug werden die Druckluft und das Oberflächenbehandlungsmittel nach dem Innenmischprinzip gemischt. Durch diese Mischung entsteht eine gleichmäßige Zerstäubung des Oberflächenbehandlungsmittels. Hierzu ist eine ausreichende Strömungsgeschwindigkeit der Druckluft in der Mischkammer des Sprühwerkzeugs erforderlich, die durch eine entsprechend geregelte Luftpumpe für die Druckluft sichergestellt wird.

Das nunmehr zerstäubte Oberflächenbehandlungsmittel gelangt von der Mischkammer zu einer Sprühdüse, die selbstverständlich ebenfalls für derartige Drücke ausgelegt ist. In der Mischkammer entsteht durch die Mischung ein geringer Druckabfall von ca. 1 bar, so dass an der Sprühdüse das zerstäubte Oberflächenbehandlungsmittel mit ca. 23 bar zur Verfügung steht. Die Sprühdüse ist über einen Kugelkopf beweglich am Sprühwerkzeug befestigt, so dass die Sprührichtung beispielsweise für geneigte Oberflächen der Gussform so eingestellt werden kann, dass der Sprühstrahl immer senkrecht auf die Oberfläche auftrifft.

Die Sprühdüse ist zum Erreichen ausreichender Geschwindigkeiten als Ringspaltdüse ausgeführt, wobei der Ringspalt eine Breite von 0,55 mm bei einem inneren Kegeldurchmesser am Düsenaustritt von 6 mm aufweist. Durch diese Düse kann auch bei weiteren Abständen der Sprühdüse von der Gussform ein zielgerichteter Sprühstrahl erzeugt werden. Mit wachsendem vorhandenen Druck des Oberflächenbehandlungsmittels und damit steigender Austrittsgeschwindigkeit aus der Ringspaltdüse wird die Wichtigkeit eines optimalen Abstandes zur Formwand der Gussform reduziert, da ausreichende Geschwindigkeiten zur Umgehung des Leidenfrost'schen Effektes auch bei größeren Abständen noch vorliegen.

Tritt das zerstäubte Oberflächenbehandlungsmittel durch die Ringspaltdüse aus und trifft mit einer entsprechend hohen Auftrittsgeschwindigkeit auf die noch heiße Formwand so entsteht zwar ein Dampfpolster durch die Verdampfung, jedoch ist dieses nicht in der Lage den weiteren Sprühstrahl gemäß des Leidenfrost'schen Effektes von der Oberfläche fernzuhalten, da der Sprühstrahl aufgrund seiner hohen kinetischen Energie das Dampfpolster durchschlägt. Somit gelangt jedoch die Wirksubstanz in Form des Trennmittels als auch das Wasser auf die Oberfläche der Formwand. Somit entsteht eine sehr gute Kühlwirkung durch das Wasser als auch eine optimale Benetzung der Formwand der Gussform mit dem Trennmittel. Anschließend muss die Gussform lediglich durch Ausblasen mit Luft ohne Förderung des Oberflächenbehandlungsmittels getrocknet werden. Auf eine vorhergehende Kühlung der Gussform kann vollständig verzichtet werden.

Die Oberflächen der Gussform werden vor dem nächsten Gießvorgang sehr stark abgekühlt. Beim Gießen entstehen hiedurch sehr hohe Erstarrungsgeschwindigkeiten. Gleichzeitig wird durch die Wachsfreiheit des Trennmittels erreicht, dass beim Gießen nur sehr geringe Vergasungen entstehen. Dies hat sehr porenarme Gefüge des Gussstücks zur Folge, so dass beispielsweise büchsenlose Druckgusskurbelgehäuse gegossen werden können, deren Lauffläche beschichtungsfähig ist. Auch wird es möglich, die Gussstücke zur Erreichung höherer Festigkeiten einem Lösungsglühprozess zu unterziehen.

Durch den Verzicht auf einen zusätzlichen Kühlvorgang können des Weiteren die Zykluszeiten deutlich reduziert werden, so dass beispielsweise bei Druckgusskurbelgehäusen bis zu 12 s pro Zyklus eingespart werden können. Dies bedeutet eine Reduzierung der Sprühzeit um etwa 50%.

Nach dem Lösen des Gussstücks aus der Gussform wird zunächst der Blasenspeicher über die Ringleitung mit Trennmittel vorgeladen. Wird über das Bedienpersonal oder einen mit der Gießmaschine verbundenen Computer der Befehl zum Starten des Sprühvorgangs gegeben, so wird zunächst die frequenzgeregelte Pumpe zum Aufbau eines ausreichenden Betriebsdruckes des Oberflächenbehandlungsmittels gestartet. Ist der Druck erreicht kann der Sprühvorgang durch Öffnen der Düsen gestartet werden.

Zum Beenden des Sprühvorgangs wird ein entsprechendes Signal an die Sprühvorrichtung gegeben, wodurch die Flüssigkeitsdruckpumpe gestoppt und der Oberflächenbehandlungsmittelstrom unterbrochen wird. Dies kann beispielsweise durch Schließen eines im Sprühwerkzeug angeordneten Ventils erfolgen. So wird eine Dauerbelastung der Pumpe selbst wie auch der weiteren Anlageteile vermieden. Im Folgenden bleibt lediglich die Verbindungsleitung zur Druckluftförderung geöffnet, so dass über die Sprühdüse die Gussform mit Luft besprüht und somit getrocknet wird. Dies hat zusätzlich den Vorteil das Rückstände des Oberflächenbehandlungsmittels im Sprühwerkzeug oder in der Ringspaltdüse ausgeblasen werden, so dass Verstopfungen zuverlässig vermieden werden. Durch die Ringspaltdüsen entstehen auch hohe Austrittsgeschwindigkeiten der Ausblasluft, so dass auch die Ausblaszeiten reduziert werden.

Durch eine derartige Sprühvorrichtung und ein derartiges Verfahren werden somit sehr gute Gussqualitäten des Gussstücks erreicht und gleichzeitig Zykluszeiten reduziert, so dass Kosten eingespart werden.

Es sollte deutlich sein, dass der Schutzbereich der Anmeldung nicht auf das beschriebene Ausführungsbeispiel beschränkt ist. Insbesondere können derartige Sprühvorrichtungen auch für mehrere Gießstationen ausgelegt werden oder die Sprühdüsen über einen Roboter computergesteuert innerhalb der Gussformhälften in beliebiger Weise dreiachsig bewegt werden. Insbesondere ist zu beachten, dass bei richtiger Auswahl des Sprühabstandes der Leidenfrost'sche Effekt bereits ab 13 bar durchschlagen werden kann.

## Patentansprüche

1. Verfahren zum Aufbringen eines Oberflächenbehandlungsmittels auf eine Formwand einer Gussform mittels einer Sprühvorrichtung, wobei das Oberflächenbehandlungsmittel in einer Oberflächenbehandlungsmittelmischstation gemischt wird und über Zuführleitungen einem Sprühgerät zugeführt wird, von wo aus das Oberflächenbehandlungsmittel sowie Druckluft in ein Sprühwerkzeug gefördert werden und anschließend das Oberflächenbehandlungsmittel mittels der Druckluft zerstäubt und über eine Sprühdüse auf die Formwand aufgesprüht wird,
**dadurch gekennzeichnet, dass**
das Oberflächenbehandlungsmittel nach Verlassen der Oberflächenbehandlungsmittelmischstation mittels einer Flüssigkeitsdruckpumpe auf einen Druck von zumindest 13 bar, vorzugsweise 24 bar, verdichtet wird.

2. Verfahren zum Aufbringen eines Oberflächenbehandlungsmittels auf eine Formwand einer Gussform nach Anspruch 1,
**dadurch gekennzeichnet, dass**
vor dem Besprühen der Formwand die Flüssigkeitsdruckpumpe eingeschaltet wird und den Druck aufbaut und zum Beenden des Sprühvorgangs zunächst die Förderung des Oberflächenbehandlungsmittels und die Flüssigkeitsdruckpumpe gestoppt werden und daraufhin die Formwand mit der Druckluft getrocknet wird.

3. Verfahren zum Aufbringen eines Oberflächenbehandlungsmittels auf eine Formwand einer Gussform nach einem der vorhergehenden Ansprüche,
**dadurch gekennzeichnet, dass**
ein wachsfreies Oberflächenbehandlungsmittel verwendet wird.

4. Sprühvorrichtung zum Aufbringen eines Oberflächenbehandlungsmittels auf eine Formwand einer Gussform mit
einer Oberflächenbehandlungsmittelmischstation,
Zuführleitungen, über die das Oberflächenbehandlungsmittel und Druckluft förderbar sind,
einem Sprühgerät, das über die Zuführleitungen mit einem Speicherbehälter fluidisch verbunden ist,
einem Sprühwerkzeug, welches über die Zuführleitungen mit dem Sprühgerät und einer Druckluftpumpe fluidisch verbunden ist und welches eine Sprühdüse aufweist, über die das Oberflächenbehandlungsmittel auf die Formwand sprühbar ist
**dadurch gekennzeichnet, dass**
zwischen der Oberflächenbehandlungsmittelmischstation und dem Sprühgerät eine Flüssigkeitsdruckpumpe angeordnet ist, über die der Druck des Oberflächenbehandlungsmittels auf zumindest 13 bar, vorzugsweise 24 bar erhöhbar ist.

5. Sprühvorrichtung zum Aufbringen eines Oberflächenbehandlungsmittels auf eine Formwand einer Gussform nach Anspruch 4,
**dadurch gekennzeichnet, dass**
die Sprühdüse als Ringspaltdüse ausgebildet ist.

6. Sprühvorrichtung zum Aufbringen eines Oberflächenbehandlungsmittels auf eine Formwand einer Gussform nach Anspruch 5,
**dadurch gekennzeichnet, dass**
der Ringspalt der Ringspaltdüse 0,5 bis 0,6 mm breit ist und der Kegeldurchmesser am Austritt der Ringspaltdüse 5 bis 7mm beträgt.

7. Sprühvorrichtung zum Aufbringen eines Oberflächenbehandlungsmittels auf eine Formwand einer Gussform nach einem der Ansprüche 5 oder 6,
**dadurch gekennzeichnet, dass**
die Winkellage der Ringspaltdüse über einen Kugelkopf einstellbar ist.

8. Sprühvorrichtung zum Aufbringen eines Oberflächenbehandlungsmittels auf eine Formwand einer Gussform nach einem der Ansprüche 4 bis 7,
**dadurch gekennzeichnet, dass**
die Zuführleitungen druckfest ausgeführt sind.

9. Sprühvorrichtung zum Aufbringen eines Oberflächenbehandlungsmittels auf eine Formwand einer Gussform nach einem der Ansprüche 4 bis 8,
**dadurch gekennzeichnet, dass**
in Strömungsrichtung hinter der Flüssigkeitsdruckpumpe ein Überdruckventil angeordnet ist.

## Claims

1. A method for applying a surface treatment agent onto a mold wall of a casting mold by use of a spraying device, wherein the surface treatment agent is mixed in a surface treatment agent mixing station and is supplied, via feed lines, to a spraying device from where the surface treatment agent and pressurized air are supplied into a spraying tool and, subsequently, the surface treatment agent is atomized by means of the pressurized air and is sprayed onto the mold wall via a spraying nozzle,
**characterized in that**
the surface treatment agent after leaving the surface treatment agent mixing station is condensed by a fluid pressure pump to a pressure of at least 13 bar, preferably 24 bar.

2. The method for applying a surface treatment agent onto a mold wall of a casting mold according to claim 1,
**characterized in that**,
prior to the spraying onto the mold wall, the fluid pressure pump is switched on and builds up the pressure, and, for concluding the spraying process, the feed of the surface treatment agent and the operation of the fluid pressure pump are first stopped, followed by drying the mold wall by application of the pressurized air.

3. The method for applying a surface treatment agent onto a mold wall of a casting mold according to any one of the preceding claims,
**characterized in that**,
use is made of a wax-free surface treatment agent.

4. A spraying device for applying a surface treatment agent onto a mold wall of a casting mold, said spraying device comprising
a surface treatment agent mixing station,
feed lines via which the surface treatment agent and pressurized air can be conveyed,
a spraying device fluidically connected to the storage vessel via said feed lines,
a spraying tool which is fluidically connected to the spraying device and to a pressurized air pump via said feed lines and which comprises a spraying nozzle adapted to spray the surface treatment agent onto a mold wall, **characterized in that**,
between the surface treatment agent mixing station and the spraying device, a fluid pressure pump is arranged which is adapted to increase the pressure of the surface treatment agent to at least 13 bar, preferably 24 bar.

5. The spraying device for applying a surface treatment agent onto a mold wall of a casting mold according to claim 4,
**characterized in that**
the spraying nozzle is formed as an annular-gap nozzle.

6. The spraying device for applying a surface treatment agent onto a mold wall of a casting mold according to claim 5,
**characterized in that**
the annular gap of the annular gap nozzle has a width of 0.5 mm to 0.6 mm and the cone diameter at the exit of the annular gap nozzle is 5 mm to 7 mm.

7. The spraying device for applying a surface treatment agent onto a mold wall of a casting mold according to any one of claims 5 or 6,
**characterized in that**
the angular orientation of the annular gap nozzle is adjustable via a ball head.

8. The spraying device for applying a surface treatment agent onto a mold wall of a casting mold according to any one of claims 4 to 7,
**characterized in that**
the feed lines are pressure-tight.

9. The spraying device for applying a surface treatment agent onto a mold wall of a casting mold according to any one of claims 4 to 8,
**characterized in that**
an overpressure valve is arranged in flow direction behind the fluid pressure pump.

## Revendications

1. Procédé pour l'application d'une substance de traitement de surface sur une paroi de moule d'un moule en utilisant un dispositif de pulvérisation, la substance de traitement de surface étant mélangée dans une station de mélange de substance de traitement de surface et étant délivrée à un appareil de pulvérisation par tuyaux d'alimentation, d'où ladite substance de traitement de surface et de l'air comprimé sont délivrés dans un outil de pulvérisation, et, après, ladite substance de traitement de surface est pulvérisée et est pulvérisée sur ladite paroi de moule en utilisant une buse de pulvérisation,
**caractérisé en ce qu'**
après avoir quitté la station de mélange de substance de traitement de surface, ladite substance de traitement de surface est comprimée à une pression d'au moins 13 bar, de préférence 24 bar, par une pompe à liquide sous pression.

2. Procédé pour l'application d'une substance de traitement de surface sur une paroi de moule d'un moule selon la revendication 1, **caractérisé en ce qu'**avant la pulvérisation sur la paroi de moule, la pompe à liquide sous pression est activée et génère la pression, et que pour terminer l'opération de pulvérisation, l'on arrête d'abord la délivrance de ladite substance de traitement de surface et la pompe à liquide sous pression, puis l'on sèche la paroi de moule en utilisant l'air comprimé.

3. Procédé pour l'application d'une substance de traitement de surface sur une paroi de moule d'un moule selon l'une quelconque des revendications précédentes, **caractérisé en ce que** l'on utilise une substance de traitement de surface sans cire.

4. Dispositif de pulvérisation pour l'application d'une substance de traitement de surface sur une paroi de moule d'un moule, comprenant
une station de mélange de substance de traitement de surface,
des tuyaux d'alimentation par lesquels ladite substance de traitement de surface et de l'air comprimé peuvent être délivrés,
un appareil de pulvérisation en communication fluidique avec un réservoir de stockage par lesdits tuyaux d'alimentation,
un outil de pulvérisation en communication fluidique avec ledit appareil de pulvérisation et une pompe à air comprimé par lesdits tuyaux d'alimentation, et comprenant une buse de pulvérisation par laquelle ladite substance de traitement de surface peut être pulvérisée sur la paroi de moule,
**caractérisé en ce qu'**
une pompe à liquide sous pression est disposée entre ladite station de mélange de substance de traitement de surface et ledit appareil de pulvérisation, par laquelle pompe la pression de ladite substance de traitement de surface peut être augmentée à au moins 13 bar, de préférence 24 bar.

5. Dispositif de pulvérisation pour l'application d'une substance de traitement de surface sur une paroi de moule d'un moule selon la revendication 4, **caractérisé en ce que** la buse de pulvérisation est configurée à la manière d'une buse à fente annulaire.

6. Dispositif de pulvérisation pour l'application d'une substance de traitement de surface sur une paroi de moule d'un moule selon la revendication 5, **caractérisé en ce que** la fente annulaire de la buse à fente annulaire à une largeur de 0,5 à 0,6 mm, et que le diamètre du cône est de 5 à 7 mm à la sortie de la buse à fente annulaire.

7. Dispositif de pulvérisation pour l'application d'une substance de traitement de surface sur une paroi de moule d'un moule selon l'une des revendications 5 à 6, **caractérisé en ce que** la position angulaire de la buse à fente annulaire est réglable par une rotule.

8. Dispositif de pulvérisation pour l'application d'une substance de traitement de surface sur une paroi de moule d'un moule selon l'une des revendications 4 à 7, **caractérisé en ce que** les tuyaux d'alimentation sont résistants à la pression.

9. Dispositif de pulvérisation pour l'application d'une substance de traitement de surface sur une paroi de moule d'un moule selon l'une des revendications 4 à 8, **caractérisé en ce qu'**une soupape de surpression est disposée en aval de ladite pompe à liquide sous pression, vu dans la direction d'écoulement.
